# EUROPÄISCHE PATENTSCHRIFT

(11) **EP 3 100 658 B1**
(45) Veröffentlichungstag und Bekanntmachung des Hinweises auf die Patenterteilung: **07.08.2019**
(21) Anmeldenummer: 16172631.0
(22) Anmeldetag: 02.06.2016
(51) Int. Cl.: A47J 31/42, A47J 42/50

(54) **KAFFEEMASCHINE**
COFFEE MACHINE
MACHINE À CAFÉ

(30) Priorität: 03.06.2015 DE 102015210338
(43) Veröffentlichungstag der Anmeldung: 07.12.2016
(73) Patentinhaber: BSH Hausgeräte GmbH, 81739 München (DE)
(72) Erfinder: Mathes, Anton, 83364 Neukirchen am Teisenberg (DE); Wrehde, Stefan, 83365 Nußdorf (DE); Tracy, Timothy Mark, 83361 Kienberg (DE); Beck, Rudolf, 84518 Garching a. d. Alz (DE); Caglin, Muharrem ümit, 34535 ISTANBUL (TR); Deger, Mahir Erdem, 59850 TEKIRDAG (TR); Gökce, Ali Utku, 34349 ISTANBUL (TR); Ohlhafer, Olaf, 74391 Erligheim (DE); Freudigmann, Hans-Arndt, 70442 Stuttgart-Feuerbach (DE)

(56) Entgegenhaltungen:
- WO-A2-2010/064902
- DE-A1-102007 008 898
- DE-A1-102007 008 900
- DE-C- 504 948
- DE-U1- 20 300 933

## Beschreibung

Die Erfindung betrifft eine Kaffeemaschine.

Moderne Kaffeemaschinen besitzen üblicherweise ein Mahlwerk zum Mahlen der zu verarbeitenden Kaffeebohnen. Die zu mahlenden Kaffeebohnen sind dabei in der Regel in einem geeignet dimensionierten Behältnis der Kaffeemaschine aufgenommen, welches über eine Öffnung verfügt, über die die Kaffeebohnen aus dem Behältnis in das Mahlwerk überführt werden können. Das Behältnis fungiert für die Kaffeebohnen also typischerweise als Speichermedium, bevor diese im Mahlwerk verarbeitet werden.

Beispielsweise beschreiben die Druckschriften DE 10 2007 008 898 A1 und DE 10 2007 008 900 A1 jeweils einen abnehmbaren Bohnenbehälter mit einem Verschluss. Der Verschluss dient hierbei zur Abgabe von Bohnen aus dem Bohnenbehälter in ein Mahlwerk beziehungsweise zum Verschließen des Bohnenbehälters bei Abnahme vom Mahlwerk.

Die im Praxisbetrieb oftmals über einen Zeitraum von mehreren Tagen oder gar Wochen im Behältnis aufgenommenen Kaffeebohnen geben innerhalb dieses Zeitraums eine nicht unerhebliche Menge an CO₂ an die Umgebung, also an den Behältnis-Innenraum des Behältnisses ab, wo das CO₂ auf vorteilhafte Weise als Schutzgas verwendet werden kann, welches einem unerwünschten Alterungsprozess der Kaffeebohnen und - damit verbunden - einem unerwünschten Geschmacksverlust entgegenwirkt.

Es ist bekannt, dass der in der Luft enthaltene Sauerstoff und die Luftfeuchtigkeit das Aroma des Kaffees stark negativ beeinflussen. Dabei oxidieren einzelne Inhaltsstoffe des Kaffee. Über die Dauer der Lagerung in der Kaffeemaschine verliert der Kaffee somit seine Frische und sein Aroma. Dies hat letztendlich einen stark negativen Einfluss auf den Geschmack des mit der Kaffeemaschine zubereiteten Kaffees.

Es ist bekannt, dass durch Lagerung unter Inertgasatmosphäre oder unter Vakuum die Frische von Kaffee erheblich verlängert wird. Dabei ist eine möglichst niedrige Sauerstoffkonzentration anzustreben.

Als nachteilig bei den oben beschriebenen, herkömmlichen Kaffeemaschinen erweist sich jedoch, dass das CO₂-Gas relativ schnell durch die im Behältnis vorgesehene Öffnung in das Mahlwerk und aus diesem in die Umgebung der Kaffeemaschine entweichen kann, so dass seine Wirkung als Schutzgas für die Kaffeebohnen dort verloren geht. Dies gilt insbesondere für den praxisrelevanten Fall, dass die Öffnung in Gebrauchslage der Kaffeemaschine unten am Behältnis angeordnet ist. In diesem Fall kann das CO₂ aufgrund seines gegenüber Luft erhöhten Gewichts im Behältnis nach unten absinken und relativ rasch aus dem Behältnis entweichen. Dies gilt insbesondere, wenn eine oben am Behältnis vorgesehene, weitere verschließbare Öffnung geöffnet wird, um das Behältnis außen mit Kaffeebohnen zu befüllen. In diesem Fall kann Luft aus der Umgebung in das Behältnis gelangen, wohingegen das schwerere CO₂ über die zum Mahlwerk führende Öffnung aus dem Behältnis entweicht.

Es ist daher eine Aufgabe der vorliegenden Erfindung, eine verbesserte Ausführungsform einer Kaffeemaschine zu schaffen, die sich insbesondere durch eine verbesserte Geschmackskonservierung der in ihr aufgenommenen Kaffeebohnen auszeichnet.

Diese Aufgabe wird durch den Gegenstand der unabhängigen Patentansprüche gelöst. Bevorzugte Ausführungsformen sind Gegenstand der abhängigen Patentansprüche.

Grundgedanke der Erfindung ist demnach, die Kaffeemaschine mit einer Verschlusseinrichtung auszustatten, mittels welcher die Öffnung des Behältnisses zum Überführen von Kaffeebohnen aus dem Behältnis in das Mahlwerk, insbesondere gasdicht, verschließbar ist. Auf diese Weise kann ein unerwünschter Austritt des im Behältnis von den Kaffeebohnen abgegebenen CO₂-Gases weitgehend oder sogar vollständig verhindert werden. Besonders gering kann der Verlust an CO₂-Gas im Innenraum des Behältnisses gehalten werden, wenn die Öffnung von der Verschlusseinrichtung jeweils nur freigegeben wird, solange Kaffeebohnen vom Behältnis in das Mahlwerk überführt werden sollen, ansonsten die Öffnung jedoch von der Verschlusseinrichtung gasdicht verschlossen wird.

In einer bevorzugten Ausführungsform ist die Verschlusseinrichtung zwischen einer geschlossen Position, in welcher sie die Öffnung gasdicht verschließt, und einer geöffneten Position, in welcher sie die Öffnung zum Überführen von Kaffeebohnen aus dem Behältnis in das Mahlwerk freigibt, verstellbar. Auf diese Weise kann auf einfache und schnelle Weise eine Freigabe der Öffnung durch die Verschlusseinrichtung erfolgen, wenn - typischerweise auf eine Benutzeranforderung hin - Kaffeebohnen aus dem Behältnis in das Mahlwerk der Kaffeemaschine überführt und dort verarbeitet werden sollen. Nach dem Überführen der Kaffeebohnen aus dem Behältnis in das Mahlwerk kann die Öffnung wieder sehr schnell verschlossen werden. Im Ergebnis lässt sich der CO₂-Austritt aus dem Behältnis durch die Öffnung hindurch minimieren.

In einer erfindungsgemäßen Lösung ist in der Kaffeemaschine ein Schleusenbehälter zwischen dem Behältnis für die Kaffeebohnen und dem Mahlwerk vorgesehen. Eine derart weitergebildete Kaffeemaschine ist mit zwei Verschlusseinrichtungen ausgestattet, mittels derer zum einen die Öffnung des Behältnisses zum Überführen von Kaffeebohnen aus dem Behältnis in den wesentlich kleineren Schleusenbehälter und zum anderen mittels derer die Öffnung des Schleusenbehälters zum Überführen von Kaffeebohnen aus dem Schleusenbehälter in das Mahlwerk gasdicht verschließbar ist.

Die zu mahlende Menge an Kaffeebohnen wird dabei zunächst über die Öffnung des Behältnisses in den, gegebenenfalls zuvor mit einem Schutzgas gespülten und/oder mittels einer Pumpe vakuumierten Schleusenbehälter überführt, und anschließend die Öffnung des Behältnisses mit einer Verschlusseinrichtung wieder verschlossen. Durch die Verwendung des Schleusenbehälters, gegebenenfalls mit Stickstoff-Zwischenspülung und/oder Absaugung von Luft, wird bei der Entnahme der Kaffeebohnen keine Umgebungsluft in das Behältnis eingetragen.

In einer bevorzugten Ausführungsform ist sind die Verschlusseinrichtungen zwischen einer geschlossen Position, in welcher sie die Öffnungen gasdicht verschließen, und einer geöffneten Position, in welcher sie die Öffnungen zum Überführen von Kaffeebohnen aus dem Behältnis in den Schleusenbehälter, bzw. aus dem Schleusenbehälter in das Mahlwerk freigegeben, verstellbar.

In vorteilhafer Weise sind die Verschlusseinrichtungen alternierend verstellbar, vorzugsweise über zumindest eine Antriebseinrichtung zum Verstellen der Verschlusseinrichtungen zwischen der geöffneten und der geschlossenen Position. Bevorzugt sind drei Arbeitsstellungen der Verschlusseinrichtungen, nämlich eine erste Arbeitsstellungen, in der beide Öffnungen, insbesondere gasdicht verschlossen sind; eine zweite Arbeitsstellungen, in der eine erste Öffnung, mittels welcher die Kaffeebohnen aus dem Behältnis dem Schleusenbehälter zuführbar sind, geöffnet und eine zweite Öffnung verschlossen ist; und eine dritte Arbeitsstellungen, in der die erste Öffnung verschlossen, und die zweite Öffnung, mittels welcher die Kaffeebohnen aus dem Schleusenbehälter dem Mahlwerk zuführbar sind, geöffnet ist.

Auf diese Weise kann auf einfache und schnelle Weise eine Freigabe der Öffnungen durch die Verschlusseinrichtungen erfolgen, wenn - typischerweise auf eine Benutzeranforderung hin - Kaffeebohnen aus dem Behältnis über den Schleusenbehälter in das Mahlwerk der Kaffeemaschine überführt und dort verarbeitet werden sollen. Nach dem Überführen der Kaffeebohnen aus dem Behältnis in den Schleusenbehälter, bzw. aus dem Schleusenbehälter in das Mahlwerk können die Öffnungen wieder sehr schnell verschlossen werden. Im Ergebnis lässt sich der CO₂-Austritt aus dem Behältnis durch die Öffnungen hindurch minimieren.

Als konstruktiv besonders einfach zu realisieren und somit mit geringen Herstellungskosten verbunden erweist sich eine weitere bevorzugte Ausführungsform, bei welcher die Verschlusseinrichtung als verstellbarer Schieber oder als verstellbare Rosette oder als verstellbare Irisblende ausgebildet ist.

Eine besonders gute Verschlusswirkung mittels der zumindest einen Verschließeinrichtung ermöglicht eine vorteilhafte Weiterbildung, bei welcher die zumindest eine Verschlusseinrichtung wenigstens je ein Dichtungselement zum Abdichten des Behältnisses gegen das Mahlwerk, bzw. des Behältnisses gegen den Schleusenbehälter und den Schleusenbehälter gegen das Mahlwerk in der geschlossenen Position der Verschlusseinrichtung(en) aufweist. Ein solches Dichtungselement mag etwa in Form eines herkömmlichen Dichtungsrings - dem einschlägigen Fachmann auch als sogenannter "O-Ring" geläufig - realisiert sein.

Zum automatisierten Verstellen der Verschlusseinrichtungen zwischen ihrer geöffneten und ihrer geschlossenen Position wird vorgeschlagen, die Kaffeemaschine mit einer mit den verstellbaren Verschlusseinrichtungen, insbesondere elektrische oder magnetische oder mechanische oder pneumatischen, antriebsverbundenen Antriebseinrichtung auszustatten. Eine elektrische Antriebseinrichtung kann einen Elektromotor, höchst vorzugsweise einen elektrischen Schrittmotor umfassen. Eine magnetische Antriebseinrichtung kann einen Hubmagneten umfassen. Die Antriebseinrichtung kann dabei in einer bevorzugten Ausführungsform derart ausgebildet sein, dass sie zwei Verschlusseinrichtungen automatisiert zu verstellen vermag.

In einer erfindungsgemäßen Lösung ist im Behältnis wenigstens ein CO2-Sensor vorhanden, mittels welchem der CO2-Gehalt im Behältnis bestimmbar ist. Besonders bevorzugt kann im Behältnis der Kaffeemaschine wenigstens ein CO₂-Sensor vorhanden sein, mittels welchen der CO₂-Gehalt im Behältnis in situ bestimmbar ist. Auf diese Weise kann indirekt, nämlich über die Bestimmung des CO₂-Anteils der im Behältnis vorhandenen Luft, ein etwaiger Geschmacksverlust der im Behältnis vorhandenen Kaffeebohnen ermittelt werden. Eine besonders zuverlässige Ermittlung besagten CO₂-Gehalts kann ermittelt werden, wenn an geeigneten Positionen in dem Behältnis zwei CO₂-Sensoren verbaut werden.

Soll festgesellt werden, inwieweit ein - insbesondere temporäres - Freigeben der Öffnung durch die Verschlusseinrichtung zu einer Abnahme der CO₂-Konzentration im Behältnis führt, so empfiehlt es sich in einer weiteren bevorzugten Ausführungsform, den wenigstens einen CO₂-Sensor im Bereich der Öffnung anzuordnen.

Um den von dem wenigstens einen CO₂-Sensor ermittelten CO₂-Gehalt weiterzuverarbeiten, beispielsweise um daraus die Qualität der Kaffeebohnen abzuleiten und den Benutzer der Kaffeemaschinen über die zu erwartende Qualität zu informieren, wird in einer weiteren bevorzugten Ausführungsform vorgeschlagen, die Kaffeemaschine mit einer mit dem wenigstens einen CO₂-Sensor zusammenwirkende Auswertungseinrichtung auszustatten. Diese Auswertungseinrichtung ist dabei derart eingerichtet, dass mit ihr die vom wenigstens einen CO₂-Sensor bereitgestellten, den CO₂-Gehalt im Behältnis wiedergebenden Sensordaten auswertbar sind. Eine solche Auswertungseinrichtung mag etwa in der Art eines Mikrokontrollers ausgebildet sein.

Um den Benutzer über das Ergebnis der von der Auswertungseinrichtung durchgeführten Auswertung der vom wenigstens einen CO₂-Sensor bereitgestellten Sensordaten zu informieren, kann die Kaffeemaschine besonders bevorzugt eine mit der Auswertungseinrichtung zusammenwirkende Anzeigeeinrichtung aufweisen. Mittels der Anzeigeeinrichtung sind Informationen betreffend den CO₂-Gehalt in dem Behältnis, insbesondere visuell, darstellbar. Denkbar ist etwa, die Anzeigeeinrichtung mit optischen Elementen zu realisieren, deren Helligkeit und/oder Farbe in Abhängigkeit vom ermittelten CO₂-Gehalt im Behältnis variiert. Vorstellbar ist aber auch eine nicht-visuelle Anzeige besagten CO₂-Gehalts, etwa in der Art eines akustischen Signals, insbesondere falls der CO₂-Gehalt im Behältnis einen oder mehrere vorgegebene Schwellwerte unter- und/oder überschreitet. Auch eine Kombination aus einer visuellen und einer akustischen Anzeigeeinrichtung ist möglich.

In einer vereinfachten Variante, welche auf die Bereitstellung einer Auswertungseinrichtung verzichtet, kann besagte Anzeigeeinrichtung bei geeigneter Anpassung an das vom wenigstens einen CO₂-Sensor bereitgestellte Sensorsignal direkt mit diesem CO₂-Sensor zusammenwirken.

Wurde festgestellt, dass es zu einer signifikanten Abnahme der CO₂-Konzentration im Behältnis gekommen ist, kann es sinnvoll sein, das Behältnis mit einem Schutzgas zu spülen, und/oder die darin enthaltene Luft mittels einer Pumpe abzusaugen. Das Absaugen der Luft ist beispielsweise mittels handbetriebenen Vakuumpumpen wie sie beispielsweise für Weinflaschen oder Vorratsbehälter zum Einsatz kommen, durchführbar. Selbstverständlich können auch geeignete elektrisch betriebene Pumpen eingesetzt werden.

Hierfür ist das Behältnis gegenüber der Umgebungsluft abgedichtet, insbesondere gasdicht verschlossen, und mit einer Zustrommöglichkeit für Stickstoff, und wahlweise mit einer Möglichkeit zur Absaugung von in dem Behältnis vorhandener Gase versehen.

In einer vorteilhaften Weiterbildung kann die erfindungsgemäße Kaffeemaschine mit einer Vorrichtung zur Abtrennung des Luftstickstoffes aus der Umgebungsluft versehen sein. Der abgetrennte Stickstoff dient dabei als Schutzgas für die Kaffeebohnen in dem Behältnis. Als Verfahren für die Auftrennung der Umgebungsluft in Stickstoff und Sauerstoff wird in vorteilhafter Weise ein Membranverfahren gemäß dem Stand der Technik (vgl. beispielsweise DE 69724679T2), oder ein Absorptionsverfahren verwendet. Das Membranverfahren kann aufgrund der unterschiedlichen Diffusionsgeschwindigkeiten in einer Membran die einzelnen Luftbestandteile trennen. Typische Reinheitsgrad des damit erzielten im Inertgasstroms (Stickstoff plus gegebenenfalls Argon) liegen bei ca. 99 %. Für eine Befüllung des Behältnisses mit Kaffeebohnen öffnet der Benutzer diesen und füllt frische Bohnen ein. Anschließend ergeben sich vorzugsweise folgende Betriebsstrategien für die Erhaltung der Frische der Kaffeebohnen in dem Behältnis:
1. Der Druck in dem Behältnis wird mittels einer Pumpe reduziert. Die darin enthaltene Luft wird somit zum Großteil aus dem Behältnis entfernt. Anschließend wird das Behältnis mit dem in der Kaffeemaschine abgetrennten Stickstoff geflutet. Die genannten Schritte können wahlweise mehrmals hintereinander durchgeführt werden.
2. Das Behältnis wird mehrmals mit dem intern abgetrennten stickstoffgespült. Dadurch wird der ursprünglich vorhandene Sauerstoff durch Stickstoff verdrängt. Für diese Betriebsstrategie ist keine zusätzliche Pumpe in der Kaffeemaschine integriert.

Bei der Verwendung eines Einwegbehälters mit einer Schutzgas Atmosphäre können die Komponenten in der Kaffeemaschine zur Stickstoffabtrennung und Absaugung entfallen. Der Einwegbehälter mit dem Kaffee wird vom Benutzer in die Kaffeemaschine eingelegt und verbleibt dort ist der darin enthaltene Kaffee aufgebraucht ist.

Dieser Einwegbehälter enthält Kaffee für mehrere Portionen eines Kaffeegetränks und ein Schutzgas. Für die Zubereitung des Kaffeegetränks wird über einen Portionierer die benötigte Menge an Kaffee entnommen. In vorteilhafterweise verhindert der Portionierer durch entsprechende Abdichtungen ein Eindringen der Umgebungsluft in den Einwegbehälter im Verlauf der Kaffeeentnahme.

Bevorzugt kann die Kaffeemaschine zusätzlich zum wenigstens einen CO₂-Sensor wenigstens einen zusätzlichen Sensor umfassen. Der zusätzliche Sensor ist dafür eingerichtet, mittels diesem wenigstens einen zusätzlichen, die Kaffeebohnen charakterisierenden Parameter zu bestimmen. Auch der zusätzliche Sensor wirkt vorzugsweise - in analoger Weise zum wenigstens einen CO₂-Sensor - mit der Auswertungseinrichtung und/oder mit der Anzeigeeinrichtung zusammen.

Besonders bevorzugt ist dieser zusätzliche Parameter eine Temperatur oder eine Feuchtigkeit der im Behältnis befindlichen Luft. Beide Parameter haben einen erheblichen Einfluss auf das aus den Kaffeebohnen im gemahlenen Kaffee erzeugbare Aroma, so dass deren Kenntnis bei der Beurteilung der Qualität der Kaffeebohnen von erheblicher Bedeutung ist. Auch der wenigstens eine zusätzliche Sensor kann - in analoger Weise zum wenigstens einen CO₂-Sensor - zum Zusammenwirken mit der oben erläuterten Auswertungseinrichtung und/oder mit der oben erläuterten Anzeigeeinrichtung eingerichtet sein.

Vorzugsweise kann der wenigstens eine zusätzliche Sensor zur Detektion flüchtiger organischer Verbindungen eingerichtet sein. Solche flüchtige organische Verbindungen sind dem einschlägigen Fachmann unter der Bezeichnung "VOC" (Volatile Organic Compound") geläufig.

Ein bevorzugtes Ausführungsbeispiel der Erfindung ist in der Zeichnung dargestellt und wird in der nachfolgenden Beschreibung näher erläutert.

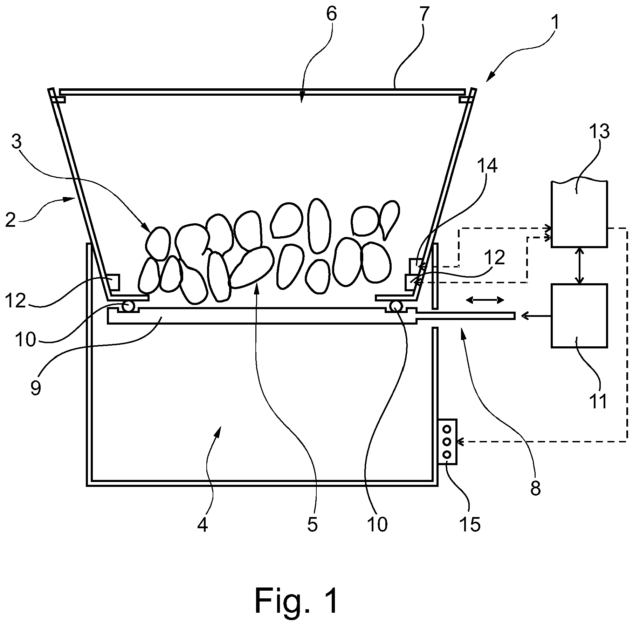

Die einzige Figur 1 zeigt in einer schematischen Darstellung die wesentlichen Komponenten einer erfindungsgemäßen Kaffeemaschine 1. Diese besitzt ein Behältnis 2 zur Aufnahme von Kaffeebohnen 3. Weiterhin besitzt die Kaffeemaschine 1 ein Mahlwerk 4 zum Mahlen der im Behältnis 2 aufgenommenen Kaffeebohnen 3. Bezüglich einer Gebrauchslage der Kaffeemaschine 1 ist das Mahlwerk 4 unterhalb des Behältnisses 2 angeordnet.

Unten am Behältnis 2 ist eine Öffnung 5 vorhanden, mittels welcher die Kaffeebohnen 3 aus dem Behältnis 2 dem Mahlwerk 4 zuführbar sind. Oben am Behältnis 2, also der Öffnung 5 gegenüberliegend, kann eine zusätzliche Öffnung 6 vorgesehen sein, über welche die Kaffeebohnen 3 in das Behältnis 2, dem Wirkprinzip eines Speichers folgend, eingebracht werden können. Die zusätzliche Öffnung 6 kann mittels eines Deckels 7 verschlossen werden. Die Kaffeemaschine 1 besitzt darüber hinaus eine Verschlusseinrichtung 8, mittels welcher die Öffnung 5 gasdicht verschließbar ist. Die Verschlusseinrichtung 8 ist zwischen einer geschlossen Position, in welcher sie die Öffnung 5 gasdicht verschließt, und einer geöffneten Position verstellbar, in welcher sie die Öffnung 5 zum Überführen der Kaffeebohnen 3 aus dem Behältnis 2 in das Mahlwerk 4 freigibt. Hierzu kann die Verschlusseinrichtung wie in Figur 1 schematisch angedeutet als, insbesondere horizontal, verstellbarer Schieber 9 ausgebildet sein. Alternativ dazu ist auch eine Realisierung der Verschlusseinrichtung 8 in Form einer verstellbaren Rosette oder in Form einer verstellbaren Irisblende (beide Varianten sind in den Figuren nicht gezeigt) denkbar. In der verschlossenen Position der Verschlusseinrichtung 8 kann ein unerwünschter Austritt des im Behältnis von den Kaffeebohnen abgegebenen CO₂-Gases durch die Öffnung 5 hindurch weitgehend oder sogar vollständig vermieden werden. Zum gasdichten Abdichten des Behältnisses 2 gegen Umgebungsluft in Richtung des Mahlwerks 4 in der geschlossenen Position der Verschlusseinrichtung 8 kann diese mit einem Dichtungselement 10, beispielsweise in Form eines Dichtungs- oder O-Rings, bevorzugt aus einem Elastomer, besonders bevorzugt aus Gummi, ausgestattet sein. Zum Verstellen der Verschlusseinrichtung 8 zwischen der geöffneten und der geschlossenen Position ist die Kaffeemaschine 1 im Beispiel der Figur 1 mit einer elektrischen, magnetischen, mechanischen oder pneumatischen Antriebseinrichtung 11 versehen, die mit der verstellbaren Verschlusseinrichtung 8 antriebsverbunden ist. Die Antriebseinrichtung 11 kann beispielsweise einen Elektromotor, vorzugsweise einen elektrischen Schrittmotor, oder einen Hubmagneten umfassen. Selbstverständlich kann der Fachmann auch andere geeignete Aktuatoren auf elektrischer, magnetischer, mechanischer oder pneumatischer Basis in Betracht ziehen.

Der Figur 1 entnimmt man weiterhin, dass im Behältnis 2 zwei CO₂-Sensoren 12 vorhanden sind, mittels welchen der CO₂-Gehalt im Behältnis 2 bestimmbar ist. Diese sind bevorzugt im Bereich der Öffnung 5 angeordnet. Über eine solche Bestimmung des CO₂-Anteils der im Behältnis 2 vorhandenen Luft kann ein etwaiger Geschmacksverlust der im Behältnis 2 gelagerten Kaffeebohnen 3 ermittelt werden. In einer vereinfachten Variante kann auch nur ein einziger solcher CO₂-Sensor 12 vorgesehen sein. Um den von den CO₂-Sensoren 12 ermittelten CO₂-Gehalt weiterzuverarbeiten, besitzt die Kaffeemaschine 1 eine mit den beiden CO₂-Sensoren 12 zusammenwirkende Auswertungseinrichtung 13. Die Auswertungseinrichtung 13 ist dabei derart eingerichtet, dass mit ihr die von den CO₂-Sensoren 12 bereitgestellten Sensordaten ausgewertet werden können. Hierzu kann die Auswertungseinrichtung 13 in der Art eines Mikrokontrollers ausgebildet sein. Weiterhin besitzt die Kaffeemaschine 1 eine mit der Auswertungseinrichtung 13 zusammenwirkende Anzeigeeinrichtung 15, mittels welcher Informationen betreffend den CO₂-Gehalt in dem Behältnis 2 visuell dargestellt werden. Zu diesem Zweck besitzt die Anzeigeeinrichtung 15 mehre optische Elemente, etwa in Form von herkömmlichen LEDs, deren Helligkeit und/oder Farbe in Abhängigkeit vom ermittelten CO₂-Gehalt im Behältnis 2 von der Auswertungseinrichtung 13 (vgl. gestrichelter Pfeil in Figur 1) oder von den CO₂-Sensoren 12 direkt (in Figur 1 nicht gezeigt) eingestellt und entsprechend variiert wird. Alternativ oder zusätzlich zur visuellen Anzeige des CO₂-Gehalts ist auch eine akustische Anzeige mittels eines akustischen Signals denkbar, insbesondere falls der CO₂-Gehalt im Behältnis einen oder mehrere vorgegebene Schwellwert unter- und/oder überschreitet. Neben den beiden CO₂-Sensoren 12 weist die Kaffeemaschine 1 wenigstens einen zusätzlichen Sensor 14 auf. Der zusätzliche Sensor 14 ist dafür eingerichtet, wenigstens einen zusätzlichen, die Kaffeebohnen 3 charakterisierenden Parameter zu bestimmen. Dieser zusätzliche Parameter kann beispielsweise die Temperatur oder Feuchtigkeit der im Behältnis 2 befindlichen Luft sein. Beide Parameter haben einen erheblichen Einfluss auf das aus den Kaffeebohnen 3 im gemahlenen Kaffee erzeugbare Aroma, so dass deren Kenntnis bei der Beurteilung der Qualität der Kaffeebohnen 3 von Bedeutung ist. Auch der wenigstens eine zusätzliche Sensor 14 wirkt in analoger Weise zu den beiden CO₂-Sensoren 12 mit der Auswertungseinrichtung 13 und der Anzeigeeinrichtung 15 zusammen. Besonders bevorzugt kann der wenigstens eine zusätzliche Sensor 14 zur Detektion flüchtiger organischer Verbindungen, sogenannter "VOC" (Volatile Organic Compond"), eingerichtet sein.

### Bezugszeichenliste

- 1: Kaffeemaschine
- 2: Behältnis
- 3: Kaffeebohnen
- 4: Mahlwerk
- 5: Öffnung
- 6: zusätzliche Öffnung
- 7: Deckel
- 8: Verschlusseinrichtung
- 9: Schieber
- 10: Dichtungseinrichtung
- 11: Antriebseinrichtung
- 12: CO₂-Sensor
- 13: Auswertungseinrichtung
- 14: zusätzlicher Sensor
- 15: Anzeigeeinrichtung

## Patentansprüche

1. Kaffeemaschine (1), mit einem Behältnis (2) zur Aufnahme von Kaffeebohnen (3), mit einem Mahlwerk (4) zum Mahlen der im Behältnis (2) aufgenommenen Kaffeebohnen (3), wobei im Behältnis (2) eine Öffnung (5) vorhanden ist, mittels welcher die Kaffeebohnen (3) aus dem Behältnis (2) dem Mahlwerk (4) zuführbar sind, und wobei die Kaffeemaschine (1) eine Verschlusseinrichtung (8) mit wenigstens einem Dichtungselement (10) zum Abdichten des Behältnisses (2) gegen das Mahlwerk (4) in der geschlossenen Position der Verschlusseinrichtung (8) umfasst, mittels welcher die Öffnung (5) gasdicht verschließbar ist, **dadurch gekennzeichnet, dass** im Behältnis (2) wenigstens ein CO₂-Sensor (12) vorhanden ist, mittels welchem der CO₂-Gehalt im Behältnis (2) bestimmbar ist.

2. Kaffeemaschine nach Anspruch 1, **dadurch gekennzeichnet, dass** die Verschlusseinrichtung (8) zwischen einer geschlossen Position, in welcher sie die Öffnung (5) gasdicht verschließt, und einer geöffneten Position, in welcher sie die Öffnung (5) zum Einbringen von Kaffeebohnen (3) aus dem Behältnis (2) in das Mahlwerk (4) freigibt, verstellbar ist.

3. Kaffeemaschine nach Anspruch 1 oder 2, **dadurch gekennzeichnet, dass** die Verschlusseinrichtung (8) als verstellbarer Schieber (9) oder als verstellbare Rosette oder als verstellbare Irisblende ausgebildet ist.

4. Kaffeemaschine nach einem der vorhergehenden Ansprüche, **dadurch gekennzeichnet, dass** die Kaffeemaschine (1) eine mit der verstellbaren Verschlusseinrichtung (8) antriebsverbundene, insbesondere elektrische oder magnetische oder mechanische oder pneumatische, Antriebseinrichtung (11) zum Verstellen der Verschlusseinrichtung (8) zwischen der geöffneten und der geschlossenen Position umfasst.

5. Kaffeemaschine (1), mit einem Behältnis (2) zur Aufnahme von Kaffeebohnen (3), mit einem Mahlwerk (4) zum Mahlen der im Behältnis (2) aufgenommenen Kaffeebohnen (3) und mit einem Schleusenbehälter zwischen dem Behältnis (2) und dem Mahlwerk (4), wobei im Behältnis (2) eine erste Öffnung (5) vorhanden ist, mittels welcher die Kaffeebohnen (3) aus dem Behältnis (2) dem Schleusenbehälter zuführbar sind, wobei im Schleusenbehälter eine zweite Öffnung vorhanden ist, mittels welcher die Kaffeebohnen aus dem Schleusenbehälter dem Mahlwerk (4) zuführbar sind, **dadurch gekennzeichnet, dass** die Kaffeemaschine (1) zwei Verschlusseinrichtungen mit wenigstens einem Dichtungselement zum Abdichten des Behältnisses gegen den Schleusenbehälter und den Schleusenbehälter gegen das Mahlwerk in der geschlossenen Position der Verschlusseinrichtungen umfasst, mittels welcher die Öffnungen gasdicht verschließbar sind.

6. Kaffeemaschine nach Anspruch 5, **dadurch gekennzeichnet, dass** die Verschlusseinrichtungen zwischen einer geschlossen Position, in welcher sie die Öffnungen gasdicht verschließen, und einer geöffneten Position, in welcher sie die Öffnungen zum Einbringen von Kaffeebohnen freigeben, verstellbar sind.

7. Kaffeemaschine nach Anspruch 5 oder 6, **dadurch gekennzeichnet, dass** zumindest eine Verschlusseinrichtung als verstellbarer Schieber oder als verstellbare Rosette oder als verstellbare Irisblende ausgebildet ist.

8. Kaffeemaschine nach einem der Ansprüche 5 bis 7, **dadurch gekennzeichnet, dass** die Kaffeemaschine (1) eine mit den verstellbaren Verschlusseinrichtungen antriebsverbundene, insbesondere elektrische oder magnetische oder mechanische oder pneumatische, zumindest eine Antriebseinrichtung zum Verstellen der Verschlusseinrichtungen zwischen der geöffneten und der geschlossenen Positionen umfasst.

9. Kaffeemaschine nach einem der vorhergehenden Ansprüche 5 bis 8, **dadurch gekennzeichnet, dass** im Behältnis (2) wenigstens ein CO₂-Sensor (12), vorzugsweise zwei CO₂-Sensoren (12), vorhanden ist/sind, mittels welchem/welchen der CO₂-Gehalt im Behältnis (2) bestimmbar ist.

10. Kaffeemaschine nach Anspruch 1-9 oder 9, **dadurch gekennzeichnet, dass** der wenigstens eine CO₂-Sensor (12) im Bereich der Öffnung (5) angeordnet ist.

11. Kaffeemaschine nach einem der Ansprüche 1 bis 10, **dadurch gekennzeichnet, dass** die Kaffeemaschine (1) eine mit dem wenigstens einen CO₂-Sensor (12) zusammenwirkende Auswertungseinrichtung (13) umfasst, mittels welcher die vom wenigstens einen CO₂-Sensor (12) bereitgestellten, den CO₂-Gehalt im Behältnis (2) wiedergebenden Sensordaten auswertbar sind.

12. Kaffeemaschine nach einem der Ansprüche 1 bis 11, **dadurch gekennzeichnet, dass** die Kaffeemaschine (1) eine mit dem wenigstens einen CO₂-Sensor (12) und/oder mit der Auswertungseinrichtung (13) zusammenwirkende Anzeigeeinrichtung (15) umfasst, mittels welcher Informationen betreffend den CO₂-Gehalt in dem Behältnis (2), insbesondere visuell, darstellbar sind.

13. Kaffeemaschine nach einem der Ansprüche 1 bis 12, **dadurch gekennzeichnet, dass** die Kaffeemaschine (1) zusätzlich zum wenigstens einen CO₂-Sensor (12) wenigstens einen zusätzlichen Sensor (14) umfasst, der vorzugsweise mit der Auswertungseinrichtung (13) und/oder mit der Anzeigeeinrichtung (15) zusammenwirkt, und mittels welchem wenigstens ein die Kaffeebohnen (3) charakterisierender, zusätzlicher Parameter bestimmbar ist.

14. Kaffeemaschine nach Anspruch 13, **dadurch gekennzeichnet, dass** der zusätzliche Parameter eine Temperatur oder eine Feuchtigkeit der im Behältnis (2) befindlichen Luft ist.

15. Kaffeemaschine nach Anspruch 13 oder 14, **dadurch gekennzeichnet, dass** der wenigstens eine zusätzliche Sensor (14) zur Detektion flüchtiger organischer Verbindungen eingerichtet ist.

## Claims

1. Coffee machine (1), having a container (2) for receiving coffee beans (3), having a grinder (4) for grinding the coffee beans (3) received in the container (2), wherein an opening (5) is present in the container (2) by means of which the coffee beans (3) can be supplied from the container (2) to the grinder (4), and wherein the coffee machine (1) comprises a closure device (8) having at least one sealing element (10) for sealing the container (2) against the grinder (4) in the closed position of the closure device (8), by means of which the opening (5) can be closed gas-tight, **characterised in that** at least one CO₂ sensor (12) is present in the container (2), by means of which the CO₂ content in the container (2) can be determined.

2. Coffee machine according to claim 1, **characterised in that** the closure device (8) can be displaced between a closed position in which it closes the opening (5) gas-tight, and an open position in which it releases the opening (5) in order to introduce coffee beans (3) from the container (2) into the grinder (4).

3. Coffee machine according to claim 1 or 2, **characterised in that** the closure device (8) is designed as a displaceable slide (9) or as a displaceable rosette or as a displaceable iris diaphragm.

4. Coffee machine according to one of the preceding claims, **characterised in that** the coffee machine (1) comprises an in particular electric or magnetic or mechanical or pneumatic drive device (11) forming a drive system with the displaceable closure device (8) for displacing the closure device (8) between the open and the closed position.

5. Coffee machine (1), having a container (2) for receiving coffee beans (3), having a grinder (4) for grinding the coffee beans (3) received in the container (2) and having a transfer container between the container (2) and the grinder (4), wherein a first opening (5) is present in the container (2), by means of which the coffee beans (3) can be fed from the container (2) to the transfer container, wherein a second opening is present in the transfer container, by means of which the coffee beans can be fed from the transfer container to the grinder (4), **characterised in that** the coffee machine (1) comprises two closure devices having at least one sealing element for sealing the container against the transfer container and the transfer container against the grinder in the closed position of the closure devices, by means of which the openings can be closed gas-tight.

6. Coffee machine according to claim 5, **characterised in that** the closure devices can be displaced between a closed position in which they close the openings gas-tight, and an open position in which they release the openings in order to introduce coffee beans.

7. Coffee machine according to claim 5 or 6, **characterised in that** at least one closure device is designed as a displaceable slide or as a displaceable rosette or as a displaceable iris diaphragm.

8. Coffee machine according to one of claims 5 to 7, **characterised in that** the coffee machine (1) comprises at least one in particular electric or magnetic or mechanical or pneumatic drive device forming a drive system with the displaceable closure devices for displacing the closure devices between the open and the closed positions.

9. Coffee machine according to one of the preceding claims 5 to 8, **characterised in that** at least one CO₂ sensor (12), preferably two CO₂ sensors (12), is/are present in the container (2), by means of which the CO₂ content in the container (2) can be determined.

10. Coffee machine according to claim 1-9 or 9, **characterised in that** the at least one CO₂ sensor (12) is arranged in the region of the opening (5).

11. Coffee machine according to one of claims 1 to 10, **characterised in that** the coffee machine (1) comprises an evaluation device (13) interworking with the at least one CO₂ sensor (12), by means of which the sensor data provided by the at least one CO₂ sensor (12) and indicating the CO₂ content in the container (2) can be evaluated.

12. Coffee machine according to one of claims 1 to 11, **characterised in that** the coffee machine (1) comprises a display device (15) interworking with the at least one CO₂ sensor (12) and/or with the evaluation device (13), by means of which information relating to the CO₂ content in the container (2) can be represented, in particular visually.

13. Coffee machine according to one of claims 1 to 12, **characterised in that** the coffee machine (1) comprises, in addition to the at least one CO₂ sensor (12), at least one additional sensor (14) which preferably interworks with the evaluation device (13) and/or with the display device (15), and by means of which at least one additional parameter characterising the coffee beans (3) can be determined.

14. Coffee machine according to claim 13, **characterised in that** the additional parameter is a temperature or a humidity of the air located in the container (2).

15. Coffee machine according to claim 13 or 14, **characterised in that** the at least one additional sensor (14) is designed to detect volatile organic compounds.

## Revendications

1. Machine à café (1), avec un récipient (2) pour l'accueil de grains de café (3), avec un moulin (4) pour moudre les grains de café (3) accueillis dans le récipient (2), dans laquelle un orifice (5) est présent dans le récipient (2), au moyen duquel les grains de café (3) peuvent être acheminés vers le moulin (4) au départ du récipient (2), et dans laquelle la machine à café (1) comprend un dispositif d'obturation (8) avec au moins un élément d'étanchéité (10) pour étanchéifier le récipient (2) du moulin (4) en position fermée du dispositif d'obturation (8), au moyen duquel l'orifice (5) peut être obturé de façon étanche aux gaz, **caractérisée en ce qu'**au moins un capteur de CO₂ (12) est présent dans le récipient (2), au moyen duquel la teneur en CO₂ à l'intérieur du récipient (2) peut être déterminée.

2. Machine à café selon la revendication 1, **caractérisée en ce que** le dispositif d'obturation (8) est réglable entre une position fermée, dans laquelle il obture l'orifice (5) de façon étanche aux gaz, et une position ouverte, dans laquelle il libère l'orifice (5) pour l'insertion de grains de café (3) au départ du récipient (2) dans le moulin (4).

3. Machine à café selon la revendication 1 ou 2, **caractérisée en ce que** le dispositif d'obturation (8) est exécuté sous la forme d'un coulisseau (9) réglable, d'une rosace réglable ou d'un diaphragme réglable.

4. Machine à café selon l'une des revendications précédentes, **caractérisée en ce que** la machine à café (1) comprend un dispositif d'entraînement (11) en particulier électrique ou magnétique ou mécanique ou pneumatique relié en entraînement avec le dispositif d'obturation (8) réglable pour le déplacement du dispositif d'obturation (8) entre la position ouverte et la position fermée.

5. Machine à café (1), avec un récipient (2) pour l'accueil de grains de café (3), avec un moulin (4) pour moudre les grains de café (3) accueillis dans le récipient (2) et avec un réservoir à écluse entre le récipient (2) et le moulin (4), dans laquelle un premier orifice (5) est présent dans le récipient (2), au moyen duquel les grains de café (3) peuvent être acheminés vers le réservoir à écluse au départ du récipient (2), dans laquelle un deuxième orifice est présent dans le réservoir à écluse, au moyen duquel les grains de café peuvent être acheminés au moulin (4) au départ du réservoir à écluse, **caractérisée en ce que** la machine à café (1) comprend deux dispositifs d'obturation avec au moins un élément d'étanchéité pour étanchéifier le récipient du réservoir à écluse et le réservoir à écluse du moulin en position fermée des dispositifs d'obturation, au moyen desquels les orifices peuvent être obturés de façon étanche aux gaz.

6. Machine à café selon la revendication 5, **caractérisée en ce que** les dispositifs d'obturation sont réglables entre une position fermée, dans laquelle ils obturent les orifices de façon étanche aux gaz, et une position ouverte, dans laquelle ils libèrent les orifices pour l'insertion de grains de café (3).

7. Machine à café selon la revendication 5 ou 6, **caractérisée en ce qu'**au moins un dispositif d'obturation est exécuté sous la forme d'un coulisseau réglable, d'une rosace réglable ou d'un diaphragme réglable.

8. Machine à café selon l'une des revendications 5 à 7, **caractérisée en ce que** la machine à café (1) comprend au moins un dispositif d'entraînement en particulier électrique ou magnétique ou mécanique ou pneumatique relié en entraînement avec les dispositifs d'obturation réglables pour le déplacement des dispositifs d'obturation entre les positions ouvertes et fermées.

9. Machine à café selon l'une des revendications précédentes 5 à 8, **caractérisée en ce qu'**au moins un capteur de CO₂ (12), de préférence deux capteurs de CO₂ (12), est/sont présent(s) dans le récipient (2), au moyen duquel/desquels la teneur en CO₂ à l'intérieur du récipient (2) peut être déterminée.

10. Machine à café selon la revendication 1-9 ou 9, **caractérisée en ce que** l'au moins un capteur de CO₂ (12) est disposé dans la zone de l'orifice (5).

11. Machine à café selon l'une des revendications 1 à 10, **caractérisée en ce que** la machine à café (1) comprend un dispositif d'évaluation (13) coopérant avec l'au moins un capteur de CO₂ (12), au moyen duquel les données de capteur mises à disposition par l'au moins un capteur de CO₂ (12) et reflétant la teneur en CO₂ dans le récipient (2) peuvent être évaluées.

12. Machine à café selon l'une des revendications 1 à 11, **caractérisée en ce que** la machine à café (1) comprend un dispositif d'affichage (15) coopérant avec l'au moins un capteur de CO₂ (12) et/ou avec le dispositif d'évaluation (13), au moyen duquel les informations concernant la teneur en CO₂ à l'intérieur du récipient (2), peuvent être représentées, en particulier visuellement.

13. Machine à café selon l'une des revendications 1 à 12, **caractérisée en ce que** la machine à café (1) comprend, outre l'au moins un capteur de CO₂ (12), au moins un capteur supplémentaire (14), coopérant de préférence avec le dispositif d'évaluation (13) et/ou avec le dispositif d'affichage (15), et au moyen duquel au moins un paramètre supplémentaire caractérisant les grains de café (3) peut être déterminé.

14. Machine à café selon la revendication 13, **caractérisée en ce que** le paramètre supplémentaire est une température ou une humidité de l'air se trouvant dans le récipient (2).

15. Machine à café selon la revendication 13 ou 14, **caractérisée en ce que** l'au moins un capteur supplémentaire (14) est aménagé pour la détection de composés organiques volatils.
